# EUROPEAN PATENT APPLICATION

(11) **EP 4 737 955 A1**
(43) Date of publication of application: **06.05.2026**
(21) Application number: 24831796.8
(22) Date of filing: 19.06.2024
(51) Int. Cl.: G02B 1/18, G02B 1/14, G02B 1/115, G02C 7/02

(54) **LAMINATE AND SPECTACLE LENS**

(30) Priority: 30.06.2023 JP 2023108233
(71) Applicant: Nikon-Essilor Co., Ltd., Tokyo 130-0026 (JP)
(72) Inventor: WAKIYASU Hideyuki, Tokyo 130-0026 (JP); GENTILS Christopher, Tokyo 130-0026 (JP); YANASE Shogo, Tokyo 130-0026 (JP)
(74) Representative: Hoffmann Eitle
(86) International application number: PCT/JP2024/022244
(87) International publication number: WO 2025/004934

(57) **Abstract**

The object of the present disclosure is to provide a laminate with excellent scratch resistance. The laminate of the present disclosure includes: a substrate; an antireflection layer; an intermediate layer; and a water-repellent layer in this order, wherein the intermediate layer is a vapor-deposited layer formed using an intermediate layer-forming composition, and the intermediate layer-forming composition contains at least one compound X selected from the group consisting of a compound represented by the formula (X1), a hydrolysate of the compound represented by the formula (X1), and a hydrolysis condensate of the compound represented by the formula (X1), and a compound Y which is a compound different from the compound X, has at least one of an amino group and an amine skeleton, and has a silicon atom:

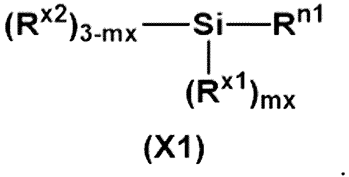

## Description

### TECHNICAL FIELD

The present disclosure relates to a laminate and a spectacle lens.

### BACKGROUND ART

Patent Literature 1 discloses a hard coat film in which a hard coat layer (X), a primer layer (Y), and a surface layer (Z) are laminated in this order on at least one surface of a substrate, wherein the surface layer (Z) has a water contact angle of 110° or more.

### CITATION LIST

### PATENT LITERATURE

Patent Literature 1: JP 2015-120253 A

### SUMMARY OF INVENTION

The present disclosure relates to a laminate including: a lens substrate; an antireflection layer; an intermediate layer; and a water-repellent layer in this order, wherein the intermediate layer is a vapor-deposited layer formed using an intermediate layer-forming composition, and the intermediate layer-forming composition contains at least one compound X selected from the group consisting of a compound represented by the formula (X1) described later, a hydrolysate of the compound represented by the formula (X1), and a hydrolysis condensate of the compound represented by the formula (X1), and a compound Y which is a compound different from the compound X, has at least one of an amino group and an amine skeleton, and has a silicon atom.

### DESCRIPTION OF EMBODIMENTS

Hereinafter, the present disclosure will be described in detail.

A laminate of the present disclosure is excellent in scratch resistance.

Although the description of components described below may be made based on representative embodiments of the present disclosure, the present disclosure is not limited to such embodiments.

In the present specification, a numerical range represented using "to" means a range including numerical values described before and after "to" as a lower limit value and an upper limit value.

In the present specification, when two or more kinds of certain components are present, the "content" of the components means the total content of the two or more kinds of components.

In the present specification, regarding numerical ranges that are described stepwise, an upper limit value or a lower limit value described in a certain numerical range may be substituted with an upper limit value or a lower limit value of another stepwise numerical range. Regarding the numerical range described in the present specification, an upper limit value or a lower limit value described in a certain numerical range may be substituted with a value shown in examples.

In the present specification, a combination of two or more preferred aspects is a more preferred aspect.

In the present specification, the "solid content" of a composition means a component that forms a layer formed using the composition, and when the composition contains a solvent (for example, an organic solvent, water, and the like), the solid content means all of components excluding the solvent. A liquid component is also regarded as the solid content as long as it is the component that forms the layer formed using the composition.

The bonding direction of a divalent group described in the present specification is not limited unless otherwise specified. For example, when Y in a compound represented by the formula "X-Y-Z" is -COO-, Y may be -COO- or -O-CO-. The compound may be "X-CO-O-Z" or "X-O-CO-Z".

### [Laminate]

The laminate includes a substrate, an antireflection layer, an intermediate layer, and a water-repellent layer in this order.

The laminate may include the antireflection layer, the intermediate layer, the water-repellent layer, and the like on one surface of the substrate, and may include the antireflection layer, the intermediate layer, the water-repellent layer, and the like on both surfaces of the substrate.

The intermediate layer is preferably disposed adjacent to the antireflection layer and the water-repellent layer. In other words, the laminate preferably includes the substrate, the antireflection layer, the intermediate layer disposed adjacent to the antireflection layer, and the water-repellent layer disposed adjacent to the intermediate layer in this order.

### <Substrate>

The laminate includes the substrate.

Examples of the substrate include a substrate composed of a material selected from an organic material and an inorganic material, and an organic material substrate is preferable.

Examples of the organic material include an acrylic acid ester resin, a methacrylic acid ester resin, a thiourethane resin, an allyl resin, an episulfide resin, polycarbonate, a urethane resin, polyester, polystyrene, polyethersulfone, poly-4-methyl-pentene-1, and a diethylene glycol bisallyl carbonate resin (CR-39), and a thiourethane resin, an episulfide resin, or a diethylene glycol bisallyl carbonate resin is preferable.

The thiourethane resin is a resin obtained by polymerizing a polyisocyanate compound and a polythiol compound.

The polyisocyanate compound is preferably m-xylylene diisocyanate, a mixture of 2,5-bis(isocyanatomethyl)-bicyclo[2,2,1]heptane and 2,6-bis(isocyanatomethyl)-bicyclo[2,2,1]-heptane, isophorone diisocyanate, hexamethylene diisocyanate, or tolylene diisocyanate.

The polythiol compound is preferably pentaerythritol tetrakis(3-mercaptopropionate), 1,2-bis[(2-mercaptoethyl)thio]-3-mercaptopropane, or a mixture of 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane.

The episulfide resin is a resin obtained by the ring-opening polymerization of a monomer having an episulfide group (epithio group) or a mixed monomer containing the monomer.

The monomer having an episulfide group is preferably bis(2,3-epithiopropyl)sulfide or bis(2,3-epithiopropyl)disulfide.

As the substrate, lens substrates such as an organic material lens substrate and an inorganic material lens substrate are also preferable.

Examples of the lens substrates include a finish lens in which a convex surface and a concave surface are optically finished and molded according to a desired power, a semi-finished lens in which only a convex surface is finished as an optical surface (for example, a spherical surface, a rotationally symmetric aspherical surface, and a progressive surface), and a lens in which a concave surface of the semi-finished lens is processed and polished according to a wearer's prescription.

The thickness of the substrate is preferably 0.8 to 30.0 mm, and more preferably 1.0 to 10.0 mm from the viewpoint of handleability.

The refractive index of the substrate is preferably 1.50 or more, more preferably 1.60 to 1.80, and still more preferably 1.60 to 1.74.

### <Antireflection Layer>

The laminate includes the antireflection layer.

The antireflection layer may have a single layer structure or a multilayer structure.

The antireflection layer is preferably an inorganic antireflection layer. The inorganic antireflection layer means an antireflection layer composed of an inorganic compound.

The antireflection layer having a multilayer structure may have a structure in which a low refractive index layer and a high refractive index layer are alternately laminated.

Examples of a material constituting the high refractive index layer include oxides of metals selected from titanium, zirconium, aluminum, niobium, tantalum, and lanthanum. Examples of a material constituting the low refractive index layer include silicon oxide.

Examples of a method for forming the antireflection layer include dry methods such as a vacuum vapor deposition method, a sputtering method, an ion plating method, an ion beam assist method, and a CVD method.

The thickness of the antireflection layer is preferably 100 to 10,000 nm, and more preferably 300 to 700 nm.

### <Intermediate Layer>

The laminate includes an intermediate layer.

The intermediate layer is a vapor-deposited layer formed using an intermediate layer-forming composition described later.

The intermediate layer functions as a primer layer of the water-repellent layer, and the intermediate layer makes the laminate more excellent in scratch resistance.

The intermediate layer preferably contains various components other than an organic solvent contained in the intermediate layer-forming composition, or cured products thereof.

The intermediate layer is a vapor-deposited layer, in other words, the intermediate layer is a layer formed by vapor-depositing the intermediate layer-forming composition.

As the vapor deposition method, a known method can be used, and examples thereof include a vacuum vapor deposition method. The vacuum vapor deposition method is a method in which a vapor deposition source is evaporated in a vacuum chamber and attached to the surface of a substrate.

A degree of vacuum in the vacuum vapor deposition method is preferably 1.0×10⁻¹ Pa or less, more preferably 5.0×10⁻² Pa or less, and still more preferably 2.0×10⁻² Pa or less, in terms of pressure during vapor deposition. The lower limit of the degree of vacuum is not particularly limited, and is often 1.0×10⁻⁴ Pa or more.

Examples of the evaporation method of the vapor deposition source in the vacuum vapor deposition method include an electron beam method, a resistance heating method, a heater heating method, and an induction heating method, and an electron beam method is preferable from the viewpoint of energy conversion efficiency.

An average vapor deposition rate during vapor deposition is preferably 0.1 to 1.5 nm/s, and more preferably 0.2 to 1.4 nm.

The average vapor deposition rate is a value (average vapor deposition rate (nm/s) = film thickness (nm)/vapor deposition time (s)) obtained by dividing the film thickness of a vapor-deposited film by a vapor deposition time required to form the vapor-deposited film having the above film thickness.

The thickness of the intermediate layer is preferably 2 to 40 nm, more preferably 4 to 37 nm, and still more preferably 5 to 35 nm.

Hereinafter, various components that can be contained in the intermediate layer-forming composition will be described in detail.

### (Intermediate Layer-Forming Composition)

The intermediate layer-forming composition contains at least one compound X selected from the group consisting of a compound represented by the formula (X1), a hydrolysate of the compound represented by the formula (X1), and a hydrolysis condensate of the compound represented by the formula (X1), and a compound Y which is a compound different from the compound X, has at least one of an amino group and an amine skeleton, and has a silicon atom. That is, the intermediate layer-forming composition contains the compound X and the compound Y.

When the intermediate layer-forming composition does not contain the compound Y, the formation efficiency of the vapor-deposited layer is lowered, which is not preferable. When the intermediate layer-forming composition does not contain the compound X, the scratch resistance is lowered, which is not preferable.

### -Compound X-

The compound X is at least one compound selected from the group consisting of the compound represented by the formula (X1), the hydrolysate of the compound represented by the formula (X1), and the hydrolysis condensate of the compound represented by the formula (X1).

The hydrolysate of the compound represented by the formula (X1) means a compound obtained by hydrolyzing hydrolyzable groups in the compound represented by the formula (X1). The hydrolysate may be a product in which all of the hydrolyzable groups are hydrolyzed (complete hydrolysate) or a product in which some of the hydrolyzable groups are hydrolyzed (partial hydrolysate). That is, the hydrolysate may be any of the complete hydrolysate, the partial hydrolysate, and a mixture thereof.

The hydrolysis condensate of the compound represented by the formula (X1) means a compound obtained by hydrolyzing hydrolyzable groups in the compound represented by the formula (X1) and condensing the obtained hydrolysate. The hydrolysis condensate may be a product in which all of the hydrolyzable groups are hydrolyzed and all of the hydrolysates are condensed (complete hydrolysis condensate), or a product in which some of the hydrolyzable groups are hydrolyzed and some of the hydrolysates are condensed (partial hydrolysis condensate). That is, the hydrolysis condensate may be any of the complete hydrolysis condensate, the partial hydrolysis condensate, and a mixture thereof.

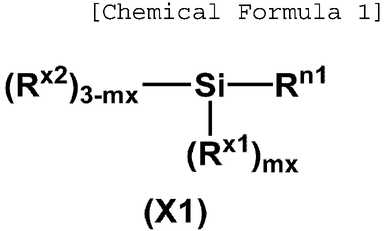

In the formula (X1), Rⁿ¹ represents an alkyl group having an amino group and optionally having -NH-. R^{x1} represents a hydroxyl group or a hydrolyzable group. R^{x2} represents a hydrocarbon group. mx represents an integer of 1 to 3.

When a plurality of R^{x1}' s are present, R^{x1}'s may be the same or different from each other. When a plurality of R^{x2}'s are present, R^{x2}'s may be the same or different from each other.

In the formula (X1), Rⁿ¹ represents an alkyl group having an amino group and optionally having -NH-.

The alkyl group may be linear, branched, or cyclic, and is preferably linear.

The number of carbon atoms in the alkyl group is preferably 1 to 20, more preferably 2 to 12, and still more preferably 3 to 10.

The number of amino groups (-NH₂) of the alkyl group is preferably 1 to 5, more preferably 1 to 3, and still more preferably 1.

The number of -NH-'s that can be contained in the alkyl group is preferably 0 to 5, more preferably 0 to 3, and still more preferably 0 or 1.

The total number of the amino groups and the -NH-'s of the alkyl group is preferably 1 to 5, more preferably 1 to 3, and still more preferably 1 or 2.

In the formula (X1), R^{x1} represents a hydroxyl group or a hydrolyzable group.

Examples of the hydrolyzable group include an alkoxy group, a halogen atom, a cyano group, an acetoxy group, and an isocyanate group, and an alkoxy group or a halogen atom is preferable, and an alkoxy group is more preferable.

The alkoxy group is preferably an alkoxy group having 1 to 4 carbon atoms, and more preferably a methoxy group or an ethoxy group.

Examples of the halogen atom include a fluorine atom, a chlorine atom, a bromine atom, and an iodine atom, and a chlorine atom is preferable.

In the formula (X1), R^{x2} represents a hydrocarbon group.

The hydrocarbon group may be linear, branched, or cyclic.

The number of carbon atoms in the hydrocarbon group is preferably 1 to 20, more preferably 1 to 10, and still more preferably 1 to 5.

The hydrocarbon group is preferably an alkyl group.

In particular, R^{x2} is preferably an alkyl group having 1 to 5 carbon atoms.

In the formula (X1), mx represents an integer of 1 to 3.

mx is preferably 2 or 3, and more preferably 3.

The compound represented by the formula (X1) is preferably a compound represented by the formula (X2).

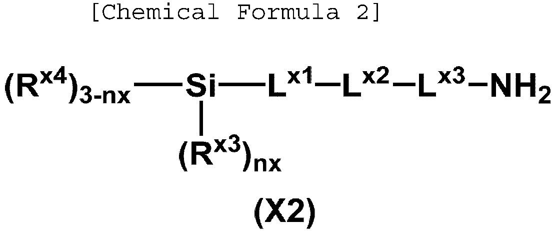

In the formula (X2), L^{x1} and L^{x3} each independently represent an alkylene group having 1 to 10 carbon atoms. L^{x2} represents a single bond or -NH-. R^{x3} represents a hydroxyl group or a hydrolyzable group. R^{x4} represents a hydrocarbon group. nx represents an integer of 1 to 3.

Note that R^{x3}, R^{x4}, and nx in the formula (X2) have the same meanings as those of R^{x1}, R^{x2}, and mx in the formula (X1), respectively, and preferred aspects are also the same.

When a plurality of R^{x3}'s are present, R^{x3}'s may be the same or different from each other. When a plurality of R^{x4}'s are present, R^{x4}'s may be the same or different from each other.

In the formula (X2), L^{x1} and L^{x3} each independently represent an alkylene group having 1 to 10 carbon atoms.

The alkylene group may be linear, branched, or cyclic, and is preferably linear.

The number of carbon atoms in the alkylene group is 1 to 10, and preferably 1 to 8.

The total number of carbon atoms of L^{x1} and L^{x2} is preferably 2 to 15, and more preferably 3 to 10.

Examples of the compound X include N-2-(aminoethyl)-3-aminopropyltrimethoxysilane, 3-aminopropyltrimethoxysilane, N-2-(aminoethyl)-8-aminooctyltrimethoxysilane, and N-2-(aminoethyl)-aminomethyltrimethoxysilane, and hydrolysates and hydrolysis condensates thereof.

### -Compound Y-

The compound Y is a compound different from the compound X, has at least one of an amino group and an amine skeleton, and has a silicon atom. That is, a compound corresponding to the compound X is not included in the compound Y.

The compound Y preferably has an amine skeleton (-NR^{N}-), and more preferably has no amino group (-NH₂) and has an amine skeleton (-NR^{N}-).

The number of amino groups (-NH₂) that can be contained in the compound Y is preferably 0 to 5, more preferably 0 to 3, and still more preferably 0.

The number of amine skeletons (-NR^{N}-) that can be contained in the compound Y is preferably 1 to 5, more preferably 1 to 3, and still more preferably 1 or 2. R^{N} represents a hydrogen atom or a substituent. The substituent is preferably an alkyl group.

The total number of the amino groups (-NH₂) and the amine skeletons (-NR^{N}-) of the compound Y is preferably 1 to 5, more preferably 1 to 3, and still more preferably 2.

The number of silicon atoms of the compound Y is 1 or more, preferably 1 to 5, and more preferably 1 to 3.

The compound Y preferably has a group represented by the formula (S). The number of groups represented by the formula (S), that can be contained in the compound Y is preferably 1 to 5, and more preferably 1 to 3.

-Si(R^{s1})ₙₛ(R^{s2})₃₋ₙₛ (S)

In the formula (S), R^{s1} represents a hydroxyl group or a hydrolyzable group. R^{s2} represents a hydrocarbon group. ns represents an integer of 1 to 3.

R^{s1}, R^{s2}, and ns in the formula (S) have the same meanings as those of R^{x1}, R^{x2}, and mx in the formula (X1), respectively, and preferred aspects are also the same.

When a plurality of R^{s1}'s are present, R^{s1}'s may be the same or different from each other. When a plurality of R^{s2}'s are present, R^{s2}'s may be the same or different from each other.

The compound Y preferably has at least one selected from the group consisting of a monovalent reactive group, an alkylene group optionally having a fluorine atom, - Si(R^{s})₂-, and a sulfide bond (-S-).

Examples of the monovalent reactive group include a vinyl group, an α-methylvinyl group, a styryl group, a methacryloyl group, an acryloyl group, an isocyanate group, an isocyanurate group, an epoxy group, and a mercapto group. The number of reactive groups that can be contained in the compound Y may be 1 or 2 or more. When the compound Y has the monovalent reactive group, the compound Y preferably has the monovalent reactive group at the terminal of the main chain.

The alkylene group optionally having a fluorine atom may be linear, branched, or cyclic, and is preferably linear. The number of carbon atoms in the alkylene group is preferably 1 to 30, and more preferably 1 to 10. When the alkylene group has fluorine atoms, the number of the fluorine atoms of the alkylene group is preferably 1 to 10, and more preferably 1 to 5. The alkylene group having fluorine atoms means an alkylene group in which one or more hydrogen atoms in the alkylene group are substituted with fluorine atoms. All of the hydrogen atoms of the alkylene group may be substituted with the fluorine atoms, or some of the hydrogen atoms may be substituted with the fluorine atoms.

R^{s} in -Si(R^{s})₂- represents a hydrogen atom, a fluorine atom, or an alkyl group optionally having a fluorine atom. The alkyl group optionally having a fluorine atom may be linear, branched, or cyclic, and is preferably linear. The number of carbon atoms in the alkyl group is preferably 1 to 30, and more preferably 1 to 10. When the alkyl group has a fluorine atom, the number of fluorine atoms of the alkyl group is preferably 1 to 10, and more preferably 1 to 5. All of the hydrogen atoms of the alkyl group may be substituted with the fluorine atoms, or some of the hydrogen atoms may be substituted with the fluorine atoms. The plurality of R^{s} may be the same or different from each other.

The compound Y preferably contains at least one selected from the group consisting of a compound represented by the formula (Y1), a hydrolysate of the compound represented by the formula (Y1), and a hydrolysis condensate of the compound represented by the formula (Y1), and more preferably contains at least one selected from the group consisting of a compound represented by the formula (Y2), a hydrolysate of the compound represented by the formula (Y2), and a hydrolysis condensate of the compound represented by the formula (Y2).

The hydrolysate and the hydrolysis condensate are as described above in the compound X.

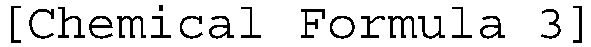

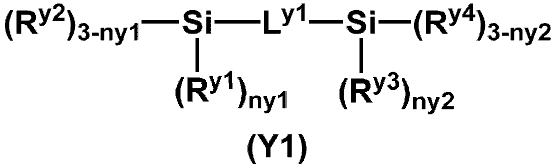

In the formula (Y1), R^{y1} and R^{y3} each independently represent a hydroxyl group or a hydrolyzable group. R^{y2} and R^{y4} each independently represent a hydrocarbon group. ny1 and ny2 each independently represent an integer of 1 to 3. L^{y1} represents a divalent linking group having at least - NR^{L1}-, and the divalent linking group may further have a group selected from the group consisting of -NR^{L1}-, - C(R^{L2})(R^{L3})-, and -Si(R^{L4})(R^{L5})-. R^{L1} represents a hydrogen atom or an alkyl group. R^{L2} to R^{L5} each independently represent a hydrogen atom, a fluorine atom, or an alkyl group optionally having a fluorine atom.

Note that R^{y1} and R^{y3} in the formula (Y1) have the same meaning as that of R^{x1} in the formula (X1), and preferred aspects thereof are also the same. R^{y2} and R^{y4} in the formula (Y1) have the same meaning as that of R^{x2} in the formula (X1), and preferred aspects thereof are also the same. ny1 and ny2 in the formula (Y1) have the same meaning as that of mx in the formula (X1), and preferred aspects thereof are also the same.

When a plurality of R^{y1}'s are present, R^{y1}'s may be the same or different from each other. When a plurality of R^{y2}'s are present, R^{y2}'s may be the same or different from each other. When a plurality of R^{y3}'s are present, R^{y3}'s may be the same or different from each other. When a plurality of R^{y4}'s are present, R^{y4}'s may be the same or different from each other. When a plurality of R^{L1}'s are present, R^{L1}'s may be the same or different from each other. When a plurality of R^{L2}'s are present, R^{L2}'s may be the same or different from each other. When a plurality of R^{L3}'s are present, R^{L3}'s may be the same or different from each other. When a plurality of R^{L4}'s are present, R^{L4}'s may be the same or different from each other. When a plurality of R^{L5}'s are present, R^{L5}'s may be the same or different from each other.

In the formula (Y1), L^{y1} represents a divalent linking group having at least -NR^{L1}-, and the divalent linking group may further have a group selected from the group consisting of -NR^{L1}-, -C(R^{L2})(R^{L3})-, and -Si (R^{L4})(R^{L5})-. R^{L1} represents a hydrogen atom or an alkyl group. R^{L2} to R^{L5} each independently represent a hydrogen atom, a fluorine atom, or an alkyl group optionally having a fluorine atom.

The alkyl group represented by R^{L1} may be linear, branched, or cyclic, and is preferably linear. The number of carbon atoms in the alkyl group is preferably 1 to 5, and more preferably 1 to 3. R^{L1} is preferably a hydrogen atom.

The alkyl group optionally having a fluorine atom, represented by any of R^{L2} to R^{L5} has the same meaning as that of the alkyl group optionally having a fluorine atom, represented by R^{s} in -Si(R^{s})₂-, and preferred aspects thereof are also the same.

L^{y1} may be a divalent linking group formed by combining -NR^{L1}- and at least one group selected from the group consisting of -C(R^{L2})(R^{L3})- and -Si(R^{L4})(R^{L5})- as long as it is a divalent linking group having -NR^{L1}-.

L^{y1} is preferably a divalent linking group composed of -NR^{L1}- and -C(R^{L2})(R^{L3})-, and more preferably a divalent linking group composed of at least two (preferably 2 to 3) -NR^{L1}-'s and at least two (preferably 2 to 9) - C(R^{L2)}(R^{L3})-'s.

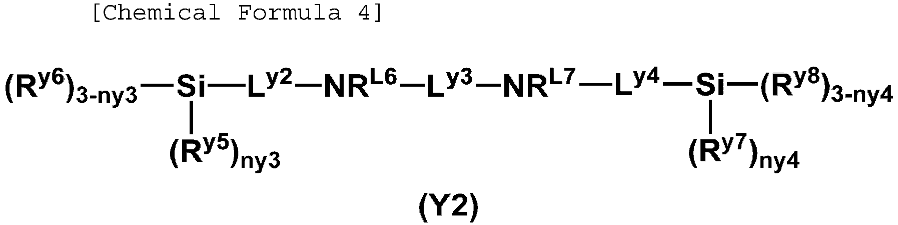

In the formula (Y2), R^{y5} and R^{y7} each independently represent a hydroxyl group or a hydrolyzable group. R^{y6} and R^{y8} each independently represent a hydrocarbon group. ny3 and ny4 each independently represent an integer of 1 to 3. R^{L6} and R^{L7} each independently represent a hydrogen atom or an alkyl group. L^{y2} to L^{y4} each independently represent an alkylene group optionally having a fluorine atom.

Note that R^{y5} and R^{y7} in the formula (Y2) have the same meaning as that of R^{x1} in the formula (X1), and preferred aspects thereof are also the same. R^{y6} and R^{y8} in the formula (Y2) have the same meaning as that of R^{x2} in the formula (X1), and preferred aspects thereof are also the same. ny3 and ny4 in the formula (Y2) have the same meaning as that of mx in the formula (X1), and preferred aspects thereof are also the same. R^{L6} and R^{L7} in the formula (Y2) have the same meaning as that of R^{L1} in the formula (Y1), and preferred aspects thereof are also the same.

When a plurality of R^{y5}'s are present, R^{y5}'s may be the same or different from each other. When a plurality of R^{y6}'s are present, R^{y6}'s may be the same or different from each other. When a plurality of R^{y7}'s are present, R^{y7}'s may be the same or different from each other. When a plurality of R^{y8}'s are present, R^{y8}'s may be the same or different from each other.

The alkylene group optionally having a fluorine atom, represented by any of L^{y2} to L^{y4} may be linear, branched, or cyclic, and is preferably linear. The number of carbon atoms in the alkylene group is preferably 1 to 30, more preferably 1 to 10, and still more preferably 1 to 5. When the alkylene group has fluorine atoms, the number of the fluorine atoms of the alkylene group is preferably 1 to 10, and more preferably 1 to 5.

The alkylene group is also preferably an alkylene group having no fluorine atom.

Examples of the compound Y include N,N'-bis[3-(trimethoxysilyl)propyl]-1,2-ethanediamine (X12-5263HP, manufactured by Shin-Etsu Chemical Co., Ltd.).

The content of the compound X in the intermediate layer-forming composition is preferably 1.0 to 95.0 mass%, more preferably 10.0 to 90.0 mass%, and still more preferably 33.0 to 71.0 mass%, with respect to the total content of the compound X and the compound Y.

The content of the compound X is preferably 1.0 to 95.0 mass%, more preferably 10.0 to 90.0 mass%, and still more preferably 33.0 to 71.0 mass%, with respect to the total solid content of the intermediate layer-forming composition.

The content of the compound Y is preferably 5.0 to 99.0 mass%, more preferably 10.0 to 90.0 mass%, and still more preferably 29.0 to 67.0 mass%, with respect to the total solid content of the intermediate layer-forming composition.

The total content of the compound X and the compound Y is preferably 80 mass% or more, more preferably 90 mass% or more, and still more preferably 99 mass% or more, with respect to the total solid content of the intermediate layer-forming composition. The upper limit of the total content is 100 mass%.

### -Organic Solvent-

The intermediate layer-forming composition may contain an organic solvent.

Examples of the organic solvent include an alcohol-based solvent, a ketone-based solvent, an ether-based solvent, an ester-based solvent, a hydrocarbon-based solvent, a halogenated hydrocarbon-based solvent, an amide-based solvent, a sulfone-based solvent, and a sulfoxide-based solvent.

The organic solvents may be used singly or in combination of two or more kinds thereof.

### <Water-Repellent Layer>

The laminate includes a water-repellent layer.

The water-repellent layer reduces the surface energy of the laminate, thereby improving the anti-staining properties and slippage of the laminate, and also improving the abrasion resistance of the laminate.

The water-repellent layer is preferably a layer formed using a water-repellent layer-forming composition.

The water-repellent layer preferably contains various components other than an organic solvent contained in the water-repellent layer-forming composition, or cured products thereof.

Examples of a method for forming the water-repellent layer include a method for curing the coating film of the water-repellent layer-forming composition and a method for vapor-depositing the water-repellent layer-forming composition.

That is, the water-repellent layer is preferably a layer obtained by applying the water-repellent layer-forming composition on a desired member to form a coating film, and subjecting the coating film to a curing treatment, or a vapor-deposited layer obtained by vapor-depositing the water-repellent layer-forming composition on a desired member.

More specific examples of a method for curing the coating film of the water-repellent layer-forming composition include a method in which the water-repellent layer-forming composition is applied onto a desired member to form a coating film, and the coating film is subjected to a curing treatment (for example, drying treatment) as necessary to form the water-repellent layer.

Examples of a method for applying the water-repellent layer-forming composition include a dipping coating method, a spin coating method, a spray coating method, an inkjet coating method, and a flow coating method.

Examples of a method for vapor-depositing the water-repellent layer-forming composition include the method for vapor-depositing the intermediate layer-forming composition described above.

A degree of vacuum during the vapor deposition of the water-repellent layer is preferably 1.0×10⁻¹ Pa or less, more preferably 5.0×10⁻² Pa or less, and still more preferably 2.0×10⁻² Pa or less, in terms of pressure during vapor deposition. The lower limit of the degree of vacuum is not particularly limited, and is often 1.0×10⁻⁴ Pa or more.

The evaporation method of a vapor deposition source in the vacuum vapor deposition method during the vapor deposition of the water-repellent layer is preferably an electron beam method or a resistance heating method.

An average deposition rate during the vapor deposition of the water-repellent layer is preferably 0.1 to 1.5 nm/s, and more preferably 0.2 to 1.4 nm. The definition of the average deposition rate is as described above.

The thickness of the water-repellent layer is preferably 2 to 40 nm, and more preferably 4 to 37 nm.

Hereinafter, various components that can be contained in the water-repellent layer-forming composition will be described in detail.

### (Water-Repellent Layer-Forming Composition)

The water-repellent layer-forming composition preferably contains an organosilicon compound having a fluorine atom and a silicon atom, and more preferably contains at least one selected from the group consisting of an organosilicon compound A having at least one selected from the group consisting of a perfluorooxyalkylene group and a poly(perfluorooxyalkylene) chain and having a silicon atom, and an organosilicon compound B having neither a perfluorooxyalkylene group nor a poly(perfluorooxyalkylene) chain but having a silicon atom.

### -Organosilicon Compound A-

The organosilicon compound A is a compound having at least one selected from the group consisting of a perfluorooxyalkylene group and a poly(perfluorooxyalkylene) chain and having a silicon atom.

The perfluorooxyalkylene group may be linear, branched, or cyclic.

The number of carbon atoms in the perfluorooxyalkylene group is preferably 1 to 20, more preferably 1 to 10, and still more preferably 1 to 3.

The perfluorooxyalkylene group is preferably -ORf-. Rf represents a perfluoroalkylene group. The perfluoroalkylene group may be linear, branched, or cyclic. The number of carbon atoms in the perfluoroalkylene group is preferably 1 to 20, more preferably 1 to 10, and still more preferably 1 to 3.

The poly(perfluorooxyalkylene) chain may be linear, branched, or cyclic.

The number of carbon atoms in the poly(perfluorooxyalkylene) chain is preferably 5 or more, more preferably 30 or more, and still more preferably 50 or more. The upper limit of the number of carbon atoms is preferably 1,000 or less, and more preferably 500 or less.

The poly(perfluorooxyalkylene) chain is preferably a group represented by the formula (F).

-(ORf)_{mf}- (F)

In the formula (F), Rf represents a perfluoroalkylene group. mf represents the number of 2 or more.

Rf has the same meaning as that of the perfluoroalkylene group constituting the perfluorooxyalkylene group, that can be contained in the organosilicon compound, and preferred aspects thereof are also the same.

mf is the number of 2 or more, preferably 10 or more, and more preferably 20 or more. The upper limit of the number is preferably 1,000 or less, more preferably 500 or less, and still more preferably 100 or less.

Examples of the poly(perfluorooxyalkylene) chain include -(OCF₂)_{mf}-, -(OCF₂CF₂)_{mf}-, -(OCF₂CF₂CF₂)_{mf}-, - (OCF₂CF(CF₃))_{mf}-, -(OCF₂CF₂CF₂CF₂)_{mf}-, -(OCF₂CF₂CF₂CF₂CF₂CF₂)_{mf}-, and -(OC(CF₃)₂)_{mf}-, and -(OCF₂)_{mf}-, -(OCF₂CF₂)_{mf}-, or - (OCF₂CF₂CF₂)_{mf}- is preferable.

The number of silicon atoms of the organosilicon compound A is 1 or more, preferably 1 to 20, and more preferably 1 to 10.

The organosilicon compound A preferably has a group represented by the formula (S), that can be contained in the compound Y described above. The number of groups represented by the formula (S), that can be contained in the organosilicon compound A is preferably 1 to 20, and more preferably 1 to 10.

The organosilicon compound A preferably further has a perfluoroalkyl group.

The perfluoroalkyl group may be linear, branched, or cyclic.

The number of carbon atoms in the perfluoroalkyl group is preferably 1 to 20, more preferably 1 to 10, still more preferably 2 to 8, and particularly preferably 2 to 5.

The perfluoroalkyl group is preferably CF₃-(CF₂)_{nf}-. nf represents the number of 0 to 10, and the number of 1 to 4 is preferable.

The organosilicon compound A preferably contains at least one selected from the group consisting of a compound represented by the formula (A1), a hydrolysate of the compound represented by the formula (A1), and a hydrolysis condensate of the compound represented by the formula (A1), and more preferably contains at least one selected from the group consisting of a compound represented by the formula (A2), a hydrolysate of the compound represented by the formula (A2), a hydrolysis condensate of the compound represented by the formula (A2), a compound represented by the formula (A3), a hydrolysate of the compound represented by the formula (A3), and a hydrolysis condensate of the compound represented by the formula (A3).

The hydrolysate and the hydrolysis condensate are as described above in the compound X.

[Chemical Formula 5] **R^{a1}-Lf^{a1}-L^{a1}-Z^{a1} (A1)**

In the formula (A1), R^{a1} represents a hydrogen atom or a substituent. Lf^{a1} represents a perfluorooxyalkylene group or a poly(perfluorooxyalkylene) chain. L^{a1} represents a single bond or a divalent linking group other than the poly (perfluorooxyalkylene) chain. Z^{a1} represents a group represented by the formula (Z1) or a group having a repeating unit, represented by the formula (Z2).

Lf^{a1} in the formula (A1) has the same meaning as that of the perfluorooxyalkylene group or the poly(perfluorooxyalkylene) chain of the organosilicon compound A, and preferred aspects thereof are also the same.

In the formula (A1), R^{a1} represents a hydrogen atom or a substituent.

As the substituent, a monovalent substituent having at least one selected from the group consisting of -O-, - NR^{T1}-, -C(R^{T2})(R^{T3})-, and -Si(R^{T4})(R^{T5})- is preferable, and a monovalent substituent having at least one selected from the group consisting of -O-, -C (R^{T2})(R^{T3})-, and - Si(R^{T4})(R^{T5}) - is more preferable. R^{T1} represents a hydrogen atom or an alkyl group. R^{T2} to R^{T5} each independently represent a hydrogen atom, a fluorine atom, or an alkyl group optionally having a fluorine atom. R^{T1} to R^{T5} have the same meanings as those of R^{L1} to R^{L5} in the formula (Y1), respectively, and preferred aspects thereof are also the same.

The substituent is preferably a substituent having a group represented by the formula (Z1) described later or an alkyl group optionally having a fluorine atom, and more preferably a substituent having a group represented by the formula (Z1) or a perfluoroalkyl group.

Examples of the alkyl group optionally having a fluorine atom include an alkyl group optionally having a fluorine atom, represented by R^{s}.

The perfluoroalkyl group may be linear, branched, or cyclic.

The number of carbon atoms in the perfluoroalkyl group is preferably 1 to 20, more preferably 1 to 10, still more preferably 2 to 8, and particularly preferably 2 to 5.

The perfluoroalkyl group is preferably CF₃-(CF₂)_{nf}-. nf represents the number of 0 to 10, and the number of 1 to 4 is preferable.

In the formula (A1), L^{a1} represents a single bond or a divalent linking group other than a poly(perfluorooxyalkylene) chain.

The divalent linking group other than the poly(perfluorooxyalkylene) chain is preferably a divalent linking group other than the poly(perfluorooxyalkylene) chain and having at least one selected from the group consisting of -O-, -COO-, -NR^{T1}-, -C(R^{T2})(R^{T3})-, and - Si(R^{T4})(R^{T5})-. R^{T1} to R^{T5} are as described above.

In particular, the divalent linking group other than the poly(perfluorooxyalkylene) chain is preferably a divalent linking group composed of at least one selected from the group consisting of -O- and -CH₂- or a perfluorooxyalkylene group. The perfluorooxyalkylene group has the same meaning as that of the perfluorooxyalkylene group that can be contained in the organosilicon compound A, and preferred aspects thereof are also the same.

In the formula (A1), Z^{a1} represents a group represented by the formula (Z1) or a group having a repeating unit, represented by the formula (Z2).

Z^{a1} is preferably a group having a repeating unit, represented by the formula (Z2).

When Z^{a1} is a group having a repeating unit, represented by the formula (Z2), a group represented by R^{a1}-Lf^{a1}-L^{a1}- is preferably located at the end of a polymer chain having a repeating unit, represented by the formula (Z2) .

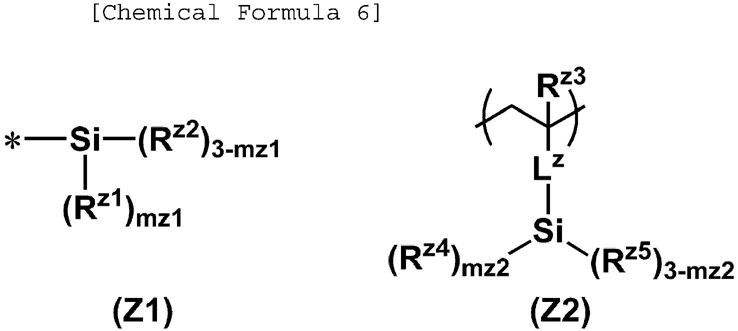

In the formula (Z1), * represents a bonding position. R^{z1} represents a hydroxyl group or a hydrolyzable group. R^{z2} represents a hydrocarbon group. mz1 represents an integer of 1 to 3.

In the formula (Z2), R^{z3} represents a hydrogen atom or a methyl group. R^{z4} represents a hydroxyl group or a hydrolyzable group. R^{z5} represents a hydrocarbon group. L^{z} represents a single bond or a divalent linking group. mz2 represents an integer of 1 to 3.

Note that R^{z1}, R^{z2}, and mz1 in the formula (Z1) have the same meanings as those of R^{x1}, R^{x2}, and mx in the formula (X1), respectively, and preferred aspects thereof are also the same. R^{z4}, R^{z5}, and mz2 in the formula (Z2) have the same meanings as those of R^{x1}, R^{x2}, and mx in the formula (X1), respectively, and preferred aspects thereof are also the same.

When a plurality of R^{z1}'sare present, R^{z1}'s may be the same or different from each other. When a plurality of R^{z2}'s are present, R^{z2}'s may be the same or different from each other. When a plurality of R^{z4}'s are present, R^{z4}'s may be the same or different from each other. When a plurality of R^{z5}'s are present, R^{z5}'s may be the same or different from each other.

R^{z3} is preferably a hydrogen atom.

In the formula (Z2), L^{z} represents a single bond or a divalent linking group.

Examples of the divalent linking group represented by L^{z} include -CO-, -O-, -S-, -SO-, -SO₂-, -NR^{N}-, divalent hydrocarbon groups (for example, an alkylene group, an alkenylene group, an arylene group, and the like), and groups obtained by combining them. R^{N} represents a hydrogen atom or a substituent. The substituent is preferably an alkyl group.

L^{z} is preferably a single bond or a divalent hydrocarbon group, more preferably a single bond or an alkylene group, and still more preferably a single bond.

[Chemical Formula 7] **Rf^{a2}-(OLf^{a2})ₘₐ-O-Lf^{a3}-Z^{a2} (A2)**

In the formula (A2), Rf^{a2} represents a perfluoroalkyl group. Lf^{a2} represents a perfluoroalkylene group. Lf^{a3} represents an alkylene group optionally having a fluorine atom. Z^{a2} represents a group represented by the formula (Z1) or a group having a repeating unit, represented by the formula (Z2). ma represents the number of 2 or more.

Note that Z^{a2} in the formula (A2) has the same meaning as that of the group represented by the formula (Z1) in the formula (A1) or the group having a repeating unit, represented by the formula (Z2), and preferred aspects thereof are also the same. ma in the formula (A2) has the same meaning as that of mf in the formula (F), and preferred aspects thereof are also the same.

The perfluoroalkyl group represented by Rf^{a2} is preferably a perfluoroalkyl group among the substituents represented by R^{a1}.

The perfluoroalkylene group represented by Lf^{a2} is preferably a perfluoroalkylene group represented by Rf in the formula (F).

The alkylene group optionally having a fluorine atom, represented by Lf^{a3} is preferably an alkylene group optionally having a fluorine atom, represented by any of L^{y2} to L^{y4} in the formula (Y2), more preferably an alkylene group having a fluorine atom, and still more preferably a perfluoroalkylene group.

[Chemical Formula 8] **Z^{a3}-AL¹-Lf^{a4}-AL²-Z^{a4} (A3)**

In the formula (A3), Z^{a3} and Z^{a4} each independently represent a group represented by the formula (Z1). AL¹ and AL² each independently represent an alkylene group optionally having -O-. L^{fa4} represents a perfluorooxyalkylene group.

Z^{a3} and Z^{a4} in the formula (A3) have the same meaning as that of the group represented by the formula (Z1) in the formula (A1), and preferred aspects thereof are also the same.

The alkylene group optionally having -O-, represented by either AL¹ or AL² may be linear, branched, or cyclic, and is preferably linear. The number of carbon atoms in the alkylene group is preferably 1 or more, and more preferably 2 or more. The upper limit of the number of carbon atoms is preferably 1,000 or less, more preferably 500 or less, and still more preferably 10 or less.

The number of -O- that can be contained in the alkylene group is preferably 0 to 2, and more preferably 1.

The perfluorooxyalkylene group represented by L^{fa4} has the same meaning as that of the perfluorooxyalkylene group that can be contained in the organosilicon compound A, and preferred aspects thereof are also the same.

Examples of the organosilicon compound A include OPTOOL (registered trademark, manufactured by Daikin Industries, Ltd., for example, DSX and UF503, and the like), SHIN-ETSU SUBELYN KY-130 (manufactured by Shin-Etsu Chemical Co., Ltd.), SHIN-ETSU SUBELYN KY-108 (manufactured by Shin-Etsu Chemical Co., Ltd.), and organosilicon compounds A synthesized by methods described in Synthesis Examples 1 and 2 of JP 2014 015609 A.

The number average molecular weight of the organosilicon compound A is preferably 2,000 or more, more preferably 4,000 or more, still more preferably 6,000 or more, and particularly preferably 7,000 or more. The upper limit of the number average molecular weight is preferably 40,000 or less, more preferably 20,000 or less, and still more preferably 15,000 or less.

The organosilicon compounds A may be used singly or in combination of two or more kinds thereof.

The content of the organosilicon compound A is preferably 1 to 100 mass%, more preferably 50 to 100 mass%, and still more preferably 80 to 100 mass%, with respect to the total solid content of the water-repellent layer-forming composition.

### -Organosilicon compound B-

The organosilicon compound B is a compound having no poly(perfluorooxyalkylene) chain and having a silicon atom.

The organosilicon compound B does not have a poly(perfluorooxyalkylene) chain. Specifically, the organosilicon compound B does not have the poly(perfluorooxyalkylene) chain of the organosilicon compound A described above.

The number of silicon atoms of the organosilicon compound B is 1 or more, preferably 1 to 100, more preferably 1 to 10, and still more preferably 1 to 3.

The organosilicon compound B preferably has a group represented by the formula (S) described above. The number of groups represented by the formula (S), that can be contained in the organosilicon compound B is preferably 1 to 20, more preferably 1 to 10, and still more preferably 1 to 3.

The organosilicon compound B preferably further has a perfluoroalkyl group.

Examples of the perfluoroalkyl group include the perfluoroalkyl group that can be contained in the organosilicon compound A described above.

The organosilicon compound B preferably contains at least one selected from the group consisting of a compound represented by the formula (B), a hydrolysate of the compound represented by the formula (B), and a hydrolysis condensate of the compound represented by the formula (B).

The hydrolysate and the hydrolysis condensate are as described above in the compound X.

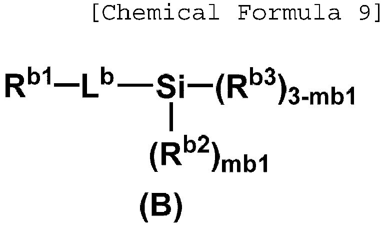

In the formula (B), R^{b1} represents an alkyl group having a fluorine atom. L^{b} represents a divalent linking group other than a perfluorooxyalkylene group and a poly (perfluorooxyalkylene) chain. R^{b2} represents a hydroxyl group or a hydrolyzable group. R^{b3} represents a hydrocarbon group. mb1 represents an integer of 1 to 3.

R^{b2}, R^{b3}, and mb1 in the formula (B) have the same meanings as those of R^{x1}, R^{x2}, and mx in the formula (X1), respectively, and preferred aspects thereof are also the same.

In the formula (B), R^{b1} represents an alkyl group having a fluorine atom.

The alkyl group having a fluorine atom may be linear, branched, or cyclic, and is preferably linear. The number of carbon atoms in the alkyl group is preferably 1 to 30, and more preferably 1 to 10. The number of fluorine atoms of the alkyl group is preferably 1 to 30, and more preferably 5 to 20. The alkyl group having a fluorine atom is preferably a perfluoroalkyl group.

In the formula (B), L^{b} represents a divalent linking group other than a perfluorooxyalkylene group and a poly(perfluorooxyalkylene) chain.

Examples of the divalent linking group other than the perfluorooxyalkylene group and the poly(perfluorooxyalkylene) chain include, among the groups represented by L^{a1} in the formula (A1), divalent linking groups other than the perfluorooxyalkylene group and the poly(perfluorooxyalkylene) chain, and a divalent linking group having at least one selected from the group consisting of -O-, -CH₂-, and -CF₂-, which is a divalent linking group other than the perfluorooxyalkylene group and the poly(perfluorooxyalkylene) chain, is preferable.

Examples of the organosilicon compound B include triethoxy-1H,1H,2H,2H-tridecafluoro-n-octylsilane (manufactured by Tokyo Chemical Industry Co., Ltd.), triethoxy(1H,1H,2H,2H-nonafluorohexyl)silane (manufactured by Tokyo Chemical Industry Co., Ltd.), trimethoxy(1H,1H,2H,2H-nonafluorohexyl)silane (manufactured by Tokyo Chemical Industry Co., Ltd.), and trimethoxy(3,3,3-trifluoropropyl)silane.

The organosilicon compounds B may be used singly or in combination of two or more kinds thereof.

The content of the organosilicon compound B is preferably 1 to 50 mass%, more preferably 5 to 30 mass%, and still more preferably 10 to 20 mass%, with respect to the total solid content of the water-repellent layer-forming composition.

The water-repellent layer-forming composition preferably contains an organosilicon compound A and an organosilicon compound B.

The total content of the organosilicon compound A and the organosilicon compound B is preferably 50 to 100 mass%, more preferably 80 to 100 mass%, and still more preferably 95 to 100 mass%, with respect to the total solid content of the water-repellent layer-forming composition.

When the water-repellent layer (or the water-repellent layer-forming composition) contains the organosilicon compound A and the organosilicon compound B, the mass ratio of the content of the organosilicon compound B to the content of the organosilicon compound A (the content of the organosilicon compound B/the content of the organosilicon compound A) is preferably 0.05 or more, more preferably 0.08 or more, and still more preferably 0.10 or more. The upper limit of the mass ratio is preferably 2.0 or less, more preferably 1.0 or less, and still more preferably 0.6 or less.

### -Organic Solvent-

The water-repellent layer-forming composition may contain an organic solvent.

The organic solvent is preferably a fluorine-based organic solvent.

Examples of a fluorinated ether-based organic solvent include hydrofluoroethers such as fluoroalkyl (preferably, a perfluoroalkyl group having 2 to 6 carbon atoms)-alkyl ether, and ethyl nonafluorobutyl ether or ethyl nonafluoroisobutyl ether is preferable.

Examples of a fluorinated amine-based organic solvent include amines in which at least one of hydrogen atoms of ammonia is substituted with a fluoroalkyl group, and tertiary amines (for example, tris(heptafluoropropyl)amine, Fluorinert (registered trademark) FC-3283, manufactured by 3M) in which all of hydrogen atoms of ammonia are substituted with fluoroalkyl groups (preferably, perfluoroalkyl groups) are preferable.

Examples of a fluorinated hydrocarbon-based organic solvent include fluorinated aliphatic hydrocarbon-based solvents such as 1,1,1,3,3-pentafluorobutane (for example, Solve 55, manufactured by Solvex Corporation), and fluorinated aromatic hydrocarbon-based solvents such as 1,3-bis(trifluoromethylbenzene).

Examples of the fluorine-based organic solvent include hydrochlorofluorocarbons such as ASAHIKLIN (registered trademark) AK225 (manufactured by AGC Inc.) and hydrofluorocarbons such as ASAHIKLIN (registered trademark) AC2000 (manufactured by AGC Inc.).

The organic solvents may be used singly or in combination of two or more kinds thereof.

### -Additive-

The water-repellent layer-forming composition may contain an additive.

Examples of the additive include a silanol condensation catalyst, an antioxidant, a rust inhibitor, an ultraviolet absorber, a light stabilizer, an antifungal agent, an antibacterial agent, a biofouling inhibitor, a deodorant, a pigment, a flame retardant, and an antistatic agent.

### <Primer Layer>

The laminate may include a primer layer.

The primer layer is preferably disposed between the substrate and the hard coat layer. In the above case, the adhesion between the substrate and the hard coat layer is easily improved, and the impact resistance of the laminate can be improved.

The primer layer preferably contains a resin. The resin may be in the form of particles.

Examples of the resin include urethane resins, epoxy resins, phenol resins, polyimides, polyesters, bismaleimide resins, and polyolefins, and urethane resins are preferable.

The primer layer may contain an additive such as a surfactant.

Examples of a method for forming the primer layer include a method in which a primer layer-forming composition containing a resin is applied onto a desired member to form a coating film, and the coating film is subjected to a curing treatment (for example, drying treatment) as necessary to form the primer layer. In other words, the primer layer is preferably a layer obtained by applying the primer layer-forming composition onto a desired member to form a coating film, and subjecting the coating film to a curing treatment.

Examples of a method for applying the primer layer-forming composition include the method for applying the intermediate layer-forming composition described above.

The thickness of the primer layer is preferably 0.3 to 2.0 µm.

### <Hard Coat Layer>

The laminate may include a hard coat layer.

The hard coat layer is preferably disposed on the primer layer, and more preferably disposed between the primer layer and the antireflection layer. When the laminate includes the hard coat layer, the scratch resistance of the laminate can be improved.

The hard coat layer preferably exhibits a hardness of H or more in a pencil hardness according to JIS K5600.

Examples of a method for forming the hard coat layer include a method in which a hard coat layer-forming composition containing an inorganic compound is applied onto a desired member to form a coating film, and the coating film is subjected to a curing treatment (for example, light irradiation treatment and drying treatment) as necessary to form the hard coat layer. In other words, the hard coat layer is preferably a layer obtained by applying the hard coat layer-forming composition onto a desired member to form a coating film, and subjecting the coating film to a curing treatment.

Examples of a method for applying the hard coat layer-forming composition onto a substrate include the method for applying the intermediate layer-forming composition described above.

As conditions for the light irradiation treatment, suitable conditions can be selected depending on the type of a polymerization initiator to be used.

Examples of the type of light during light irradiation include ultraviolet rays and visible rays. Examples of a light source include a high-pressure mercury lamp.

An integrated light amount during light irradiation is preferably 100 to 10,000 mJ/cm², and more preferably 100 to 5,000 mJ/cm² from the viewpoint of productivity and the curability of the coating film.

The thickness of the hard coat layer is preferably 1 to 20 µm, and more preferably 2 to 18 µm.

The hard coat layer-forming composition may contain an inorganic compound.

The inorganic compound is an inorganic compound selected from the group consisting of an inorganic oxide and silsesquioxane. In the present specification, silsesquioxane is not included in the inorganic oxide.

The inorganic oxide is preferably metal oxide particles.

Examples of the metal oxide particles include oxide particles of one or more metals selected from the group consisting of Ti, Zr, Si, Al, Sn, Sb, Ta, Ce, La, Fe, Zn, W, and In, and composite metal oxide particles thereof. The composite metal oxide particles are oxide particles containing two or more metals (metal atoms).

The inorganic oxide particles preferably contain one or more selected from the group consisting of SiO₂ (silicon oxide), Al₂O₃ (aluminum oxide), SnO₂ (tin oxide), ZrO₂ (zirconium oxide), and TiO₂ (titanium oxide), more preferably contain one or more selected from the group consisting of SiO₂ and ZrO₂, and still more preferably contain SiO₂.

As the inorganic oxide particles, commercially available products may be used. Examples of the commercially available inorganic oxide particles include a sol in which one or more inorganic oxide particles selected from the group consisting of SiO₂, Al₂O₃, SnO₂, ZrO₂, TiO₂, and composite oxide particles thereof are dispersed in water or an organic solvent.

Silsesquioxane is a silane compound having a basic skeleton represented by the formula (Q), obtained by hydrolyzing a trifunctional silane compound such as alkoxysilane, chlorosilane, or silanol.

Examples of the structure of silsesquioxane include an irregular form such as a random structure, a ladder structure, a cage type (completely condensed cage type) structure, and an incomplete cage type structure (a partially cleaved structure of the cage type structure, the partially cleaved structure having a structure lacking a part of silicon atoms in the cage type structure, and a structure in which a silicon-oxygen bond is cleaved in a part of the cage type structure).

R^{Q}-SiO_{3/2} (Q)

In the formula (Q), R^{Q} represents a monovalent organic group.

Examples of silsesquioxane include SQ series (for example, AC-SQ series and MAC-SQ series, manufactured by Toagosei Co., Ltd.).

The inorganic compound may be surface-treated.

Examples of the surface treatment include introduction of various functional groups and a treatment using a known surface modifier. Examples of the functional groups to be introduced into the surface of the inorganic compound include a polymerizable group, and a (meth)acrylate group is preferable. A case where the inorganic compound has a (meth)acrylate group on the surface is preferable from the viewpoint of easily reacting with resin particles that can be contained in the composition.

The average particle size of the inorganic compound is preferably 0.5 to 200 nm, and more preferably 1 to 50 nm.

The inorganic compounds may be used singly or in combination of two or more kinds thereof.

When the hard coat layer-forming composition contains the inorganic compound, the content of the inorganic compound is preferably 10.0 to 80.0 mass%, more preferably 20.0 to 70.0 mass%, and still more preferably 30.0 to 60.0 mass%, with respect to the total solid content of the hard coat layer-forming composition.

### <Method for Producing Laminate>

Examples of a method for producing the laminate of the present embodiment include known production methods.

Specific examples thereof include a method for producing a laminate including the step of forming an antireflection layer on at least one surface side of a substrate, forming an intermediate layer by vapor-depositing an intermediate layer-forming composition on the antireflection layer, and forming a water-repellent layer on the intermediate layer.

The method for forming each layer is as described above.

### <Applications of Laminate>

The laminate can be applied to various applications.

When a lens substrate is used as the substrate, the lens substrate is suitably used as a spectacle lens.

Other examples of the applications of the laminate include a front plate (window film) in a flexible display device.

The flexible display device preferably includes a laminate for a flexible display device and an organic electroluminescence display panel, and the laminate for a flexible display device is disposed on the visible side with respect to the organic electroluminescence display panel, and is foldable.

The laminate for a flexible display device may further include a polarizing plate (preferably, a circularly polarizing plate) and a touch sensor. In the laminate for a flexible display device, it is preferable that the laminate (window film), the polarizing plate, and the touch sensor are laminated in this order from the viewing side, and the laminate (window film), the touch sensor, and the polarizing plate are laminated in this order from the viewing side. The polarizing plate is preferably disposed closer to the viewing side than the touch sensor is, because the pattern of the touch sensor is less likely to be viewed and the visibility of a display image is improved. The members can be laminated by using an adhesive or a pressure-sensitive adhesive or the like.

### [Spectacle Lens]

The spectacle lens is a lens including the laminate described above, in which the substrate included in the laminate is the lens substrate.

Each member constituting the spectacle lens is as described above.

### EXAMPLES

Hereinafter, the present disclosure will be described in more detail with reference to examples, but the present disclosure is not limited by these examples at all.

### [Examples 1-1 to 1-12 and Comparative Examples 1-1 and 1-2]

A laminate of each of Examples 1-1 to 1-12 and Comparative Examples 1-1 and 1-2 was produced in the following procedure.

### <Preparation of Substrate>

A coating liquid was applied onto the surface of NL3-SP (size: 75mmφ, center thickness: 1.1 mm) manufactured by Nikon-Essilor Co., Ltd. by a spin coating method, and cured by heating to laminate a urethane-based impact resistance-improving coat (primer layer) having a thickness of about 1 µm and a silicone-based scratch resistance-improving hard coat having a thickness of about 15 µm in this order, thereby obtaining a substrate. Next, a multilayer antireflection coat (antireflection layer) made of an inorganic oxide (silica and zirconia), having a thickness of about 0.4 µm was formed on the silicone-based scratch resistance-improving hard coat (hard coat layer) by a vacuum vapor deposition method to obtain the substrate with an antireflection layer.

### <Formation of Intermediate Layer>

On the antireflection layer of the substrate with an antireflection layer obtained above, an intermediate layer-forming composition having a composition shown in Table 1 below was vapor-deposited using a vacuum vapor deposition apparatus (Model No. 1200-DLX-2, manufactured by Satisloh) at a degree of vacuum of 1.0×10⁻² Pa with the output of an electron beam set so that an average vapor deposition rate was 0.7 nm/s to form an intermediate layer having a film thickness shown in Table 1. As a result, the substrate including the intermediate layer on the antireflection layer was obtained.

The average vapor deposition rate is a value (average vapor deposition rate (nm/s) = film thickness (nm)/vapor deposition time (s)) obtained by dividing the film thickness of a vapor-deposited film (vapor-deposited layer) by a vapor deposition time required to form the vapor-deposited film having the above film thickness.

The film thickness was measured with a quartz oscillator type film thickness meter (manufactured by INFICON) in which a calibration value was set so as to indicate the film thickness on the substrate.

### <Formation of Water-Repellent Layer>

0.425 mass% of OPTOOL (registered trademark) UF503 (manufactured by Daikin Industries, Ltd.), 0.05 mass% of FAS13E (C₆F₁₃-C₂H₄-Si(OC₂H₅)₃, manufactured by Tokyo Chemical Industry Co., Ltd.), and an organic solvent FC-3283 (C₉F₂₁N, Fluorinert, manufactured by 3M) as the balance were mixed, provided that the total of all of the components was 100 mass%, thereby preparing a water-repellent layer-forming composition.

The water-repellent layer-forming composition was applied onto the substrate including the intermediate layer on the antireflection layer using a dip coater (DT-0001-S3, manufactured by SDI Corporation) under the conditions of a liquid immersion time of 10 seconds and a pulling-up speed of 3.5 mm/sec. Thereafter, moist-heat curing was performed under the conditions of 50°C, 80%RH and 30 minutes to form a water-repellent layer, thereby obtaining the laminate. The laminate includes the substrate, the antireflection layer, the intermediate layer, and the water-repellent layer in this order.

### [Examples 2-1 and 2-2 and Comparative Example 2-1]

### <Preparation of Substrate>

A coating liquid was applied onto the surface of NL3-SP (size: 75mmφ, center thickness: 1.1 mm) manufactured by Nikon-Essilor Co., Ltd. by an immersion method, and cured by heating to laminate a urethane-based impact resistance-improving coat (primer layer) having a thickness of about 1 µm and a silicone-based scratch resistance-improving hard coat (hard coat layer) having a thickness of about 2 µm in this order, thereby obtaining a substrate. Next, a multilayer antireflection coat (antireflection layer) made of an inorganic oxide (silica and zirconia), having a thickness of about 0.4 µm was formed on the silicone-based scratch resistance-improving hard coat (hard coat layer) by a vacuum vapor deposition method to obtain the substrate with the antireflection layer.

### <Formation of Intermediate Layer>

An intermediate layer was formed on the antireflection layer of the obtained substrate with an antireflection layer in accordance with the intermediate layer formation procedure described in [Examples 1-1 to 1-12 and Comparative Examples 1-1 and 1-2] described above, except that the composition and film thickness of the intermediate layer-forming composition were changed to values shown in Table 1.

### <Formation of Water-Repellent Layer>

OPTOOL (registered trademark) DSX (solid content concentration: 20 mass%, manufactured by Daikin Industries, Ltd.) and KY-130 (solid content concentration: 20 mass%, manufactured by Shin-Etsu Chemical Co., Ltd.) were mixed so that the solid content of OPTOOL (registered trademark) DSX/the solid content of KY-130 = 25/75 (mass ratio) was set to obtain a mixed solution. Subsequently, a metal container containing the mixed liquid was heat-treated at 120°C for 20 minutes to volatilize a solvent, thereby preparing a water-repellent layer-forming composition.

Using a vacuum vapor deposition apparatus (Model No. 1200-DLX-2, manufactured by Satisloh), the output of resistance heating was set so that an average vapor deposition rate was 0.1 nm/s, and a water-repellent layer having a film thickness of 12 nm was formed on the surface of the intermediate layer of the substrate including the intermediate layer on the antireflection layer at a degree of vacuum of 4.0×10⁻³ Pa.

### [Examples 3-1 to 3-3]

Laminates were produced in accordance with the laminate production procedure described in [Examples 2-1 and 2-2 and Comparative Example 2-1], except that the composition of an intermediate layer-forming composition and the film thickness of an intermediate layer were set to values described in Table 1, OPTOOL (registered trademark) DSX (solid content concentration: 20 mass%, manufactured by Daikin Industries, Ltd.), KY-130 (solid content concentration: 20 mass%, manufactured by Shin-Etsu Chemical Co., Ltd.), and trimethoxy(3,3,3-trifluoropropyl)silane (manufactured by Tokyo Chemical Industry Co., Ltd.) were used for the preparation of a water-repellent layer-forming composition, and the solid content of OPTOOL (registered trademark) DSX/the solid content of KY-130/trimethoxy(3,3,3-trifluoropropyl)silane = 20/60/20 (mass ratio) was set in the composition of a water-repellent layer-forming composition.

### [Examples 4-1 to 4-4]

Laminates were produced in accordance with the laminate production procedure described in [Examples 2-1 and 2-2 and Comparative Example 2-1], except that the composition of an intermediate layer-forming composition and the film thickness of the intermediate layer were set to values described in Table 1, OPTOOL (registered trademark) DSX (solid content concentration: 20 mass%, manufactured by Daikin Industries, Ltd.), KY-130 (solid content concentration: 20 mass%, manufactured by Shin-Etsu Chemical Co., Ltd.), and X-71-186 (solid content concentration: 20 mass%, manufactured by Shin-Etsu Chemical Co., Ltd.) were used for the preparation of a water-repellent layer-forming composition, and the solid content of OPTOOL (registered trademark) DSX/the solid content of KY-130/the solid content of X-71-186 = 20/60/20 (mass ratio) was set in the composition of the water-repellent layer-forming composition.

### [Evaluation]

### <Scratch Resistance>

The scratch resistance of the laminate was evaluated by the following procedure.

First, the visible light transmittance of the laminate was measured with a spectrophotometer (U-4100, manufactured by Hitachi High-Tech Science Corporation), and converted based on the definition of a 2-degree visual field (light source: C light source) of JIS Z8701 to obtain a luminous transmittance YA (%).

Next, a rubber sheet of 8 mm x 120 mm and an abrasive-containing plastic sheet having the same size were superimposed and fixed in this order on a flat portion of a pressing portion having a metal flat portion. The pressing portion was set so that the abrasive-containing plastic sheet fixed to the pressing portion was in contact with the surface of the laminate on the water-repellent layer side. At this time, the abrasive-containing plastic sheet and the laminate were adjusted so as to be parallel to each other.

After the above adjustment, a load of 1 kg was applied to the pressing portion, and the abrasive-containing plastic sheet and the rubber sheet were reciprocated in a linear direction at a speed of 100 times/67 seconds in a state where the laminate was fixed. The reciprocating motion was performed 100 times so that a relative moving distance between the laminate and the abrasive-containing plastic sheet was 30 mm.

After the reciprocating motion, only the laminate was rotated counterclockwise by 45° to replace the laminate, and the abrasive-containing plastic sheet and the rubber sheet were reciprocated under the same conditions as described above. The laminate was further rotated, replaced, and reciprocated twice to be reciprocated 400 times **in** total.

The luminous transmittance YB (%) of the laminate after the reciprocating motion was obtained **in** the same manner as **in** the luminous transmittance YA.

The scratch resistance was evaluated based on the "value of YA-YB (Y value difference, %)" obtained by the above procedure. The smaller the Y value difference, the more excellent the scratch resistance of the laminate, and the Y value difference is practically preferably 3.5 or less.

### [Results]

Table 1 shows the composition of the intermediate layer-forming composition, the film thickness of the intermediate layer, and the evaluation results.

**[Table 1]**

| Table 1 | Intermediate layer-forming composition | | | | Intermediate layer film thickness (nm) | Scratch resistance Y value difference |
|---|---|---|---|---|---|---|
| | Compound Y | Content (mass%) | Compound X | Content (mass%) | | |
| Example 1-1 | X-12-5263HP | 63% | KBM-603 | 37% | 32 | 2.8 |
| Example 1-2 | X-12-5263HP | 60% | KBM-603 | 40% | 32 | 3.0 |
| Example 1-3 | X-12-5263HP | 50% | KBM-603 | 50% | 27 | 3.3 |
| Example 1-5 | X-12-5263HP | 49% | KBM-603 | 51% | 32 | 3.4 |
| Example 1-6 | X-12-5263HP | 47% | KBM-603 | 53% | 31 | 2.5 |
| Example 1-7 | X-12-5263HP | 39% | KBM-603 | 61% | 18 | 3.2 |
| Example 1-8 | X-12-5263HP | 38% | KBM-603 | 62% | 28 | 2.3 |
| Example 1-9 | X-12-5263HP | 34% | KBM-603 | 66% | 25 | 3.4 |
| Example 1-10 | X-12-5263HP | 33% | KBM-603 | 67% | 27 | 3.5 |
| Example 1-11 | X-12-5263HP | 33% | KBM-603 | 67% | 34 | 0.6 |
| Example 1-12 | X-12-5263HP | 29% | KBM-603 | 71% | 20 | 2.8 |
| Comparative Example 1-1 | X-12-5263HP | 100% | KBM-603 | 0% | 27 | 5.2 |
| Comparative Example 1-2 | X-12-5263HP | 0% | KBM- 603 | 100% | 1 | 5.3 |
| Example 2-1 | X-12-5263HP | 50% | KBM-603 | 50% | 25 | 2.4 |
| Example 2-2 | X-12-5263HP | 33% | KBM-603 | 67% | 25 | 2.1 |
| Comparative Example 2-1 | X-12-5263HP | 100% | KBM-603 | 0% | 25 | 4.3 |
| Example 3-1 | X-12-5263HP | 50% | KBM-603 | 50% | 5 | 3.3 |
| Example 3-2 | X-12-5263HP | 33% | KBM-603 | 67% | 13 | 2.9 |
| Example 3-3 | X-12-5263HP | 33% | KBM-603 | 67% | 20 | 2.5 |
| Example 4-1 | X-12-5263HP | 67% | KBM-6803 | 33% | 13 | 3.3 |
| Example 4-2 | X-12-5263HP | 67% | KBM-6803 | 33% | 20 | 3.1 |
| Example 4-3 | X-12-5263HP | 50% | KBM-6803 | 50% | 5 | 3.2 |
| Example 4-4 | X-12-5263HP | 33% | KBM-6803 | 67% | 13 | 1.6 |

Compounds shown in the table are shown in detail below.
- X-12-5263HP (the following compound, manufactured by Shin-Etsu Chemical Co., Ltd.)
- KBM-603 (the following compound, manufactured by Shin-Etsu Chemical Co., Ltd.)
- KBM-6803 (the following compound, manufactured by Shin-Etsu Chemical Co., Ltd.)

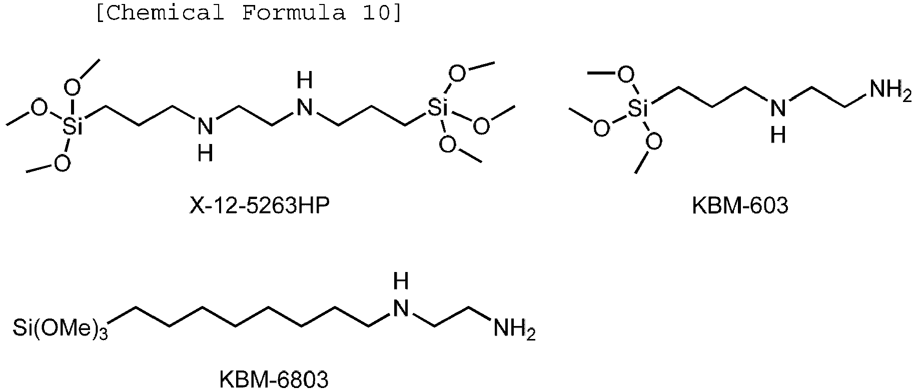

From the evaluation results, it was confirmed that the laminate of the present disclosure was excellent in scratch resistance.

## Claims

1. A laminate comprising: a substrate; an antireflection layer; an intermediate layer; and a water-repellent layer in this order,
wherein
the intermediate layer is a vapor-deposited layer formed using an intermediate layer-forming composition, and
the intermediate layer-forming composition contains at least one compound X selected from the group consisting of a compound represented by the formula (X1), a hydrolysate of the compound represented by the formula (X1), and a hydrolysis condensate of the compound represented by the formula (X1), and a compound Y which is a compound different from the compound X, has at least one of an amino group and an amine skeleton, and has a silicon atom: 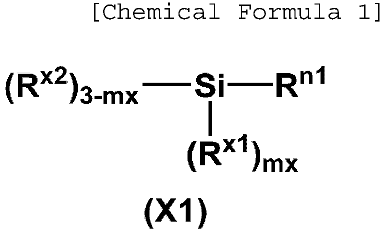
wherein Rⁿ¹ represents an alkyl group having an amino group and optionally having -NH-, R^{x1} represents a hydroxyl group or a hydrolyzable group, R^{x2} represents a hydrocarbon group, and mx represents an integer of 1 to 3.

2. The laminate according to claim 1, wherein a content of the compound X in the intermediate layer-forming composition is 33.0 to 71.0 mass% with respect to a total content of the compound X and the compound Y.

3. The laminate according to claim 1 or 2, wherein the compound Y contains at least one selected from the group consisting of a compound represented by the formula (Y1), a hydrolysate of the compound represented by the formula (Y1), and a hydrolysis condensate of the compound represented by the formula (Y1): 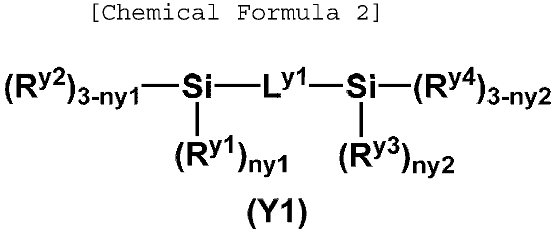
wherein R^{y1} and R^{y3} each independently represent a hydroxyl group or a hydrolyzable group, R^{y2} and R^{y4} each independently represent a hydrocarbon group, ny1 and ny2 each independently represent an integer of 1 to 3, L^{y1} represents a divalent linking group having at least -NR^{L1}-, and
the divalent linking group further optionally has a group selected from the group consisting of -NR^{L1}-, - C(R^{L2})(R^{L3})-, and -Si (R^{L4})(R^{L5})-, R^{L1} represents a hydrogen atom or an alkyl group, and R^{L2} to R^{L5} each independently represent a hydrogen atom, a fluorine atom, or an alkyl group optionally having a fluorine atom.

4. A spectacle lens comprising the laminate according to any one of claims 1 to 3, wherein the substrate of the laminate is a lens substrate.
